# EUROPÄISCHE PATENTANMELDUNG

(11) **EP 2 693 204 A1**
(43) Veröffentlichungstag der Anmeldung: **05.02.2014**
(21) Anmeldenummer: 13177185.9
(22) Anmeldetag: 19.07.2013
(51) Int. Cl.: G01N 21/88

(54) **Anrissdetektion und Rissüberwachung mittels Lumineszenz**

(30) Priorität: 01.08.2012 DE 102012107037
(71) Anmelder: Bundesrepublik Deutschland, vertreten durch das Bundesministerium für Wirtschaft und Technologie, Dieses vertreten durch den Präsidenten der BAM,, 12205 Berlin (DE)
(72) Erfinder: Mehdianpour, Milad, 12205 Berlin (DE)
(74) Vertreter: Zimmermann & Partner

(57) **Zusammenfassung**

Verfahren zur Anrissdetektion an einem ermüdungsbeanspruchten Bauteil, umfassend: - Behandeln zumindest eines Teils einer Bauteiloberfläche des ermüdungsbeanspruchten Bauteils durch Aufbringen eines lumineszierenden Indikators, sodass die behandelte Bauteiloberfläche mit einer geschlossenen Indikatorschicht bedeckt ist und die Indikatorschicht fest auf dem zumindest einen Teil der Bauteiloberfläche haftet; - zumindest abschnittsweises Erzeugen einer Abdeckschicht auf der Indikatorschicht, sodass die abgedeckte Indikatorschicht kein Lumineszenzlicht abgibt; - Beaufschlagen des zumindest abschnittsweise mit einer abgedeckten Indikatorschicht versehenen Bauteils mit einer Ermüdungsbeanspruchung; - Beleuchten des zumindest einen Teils der Bauteiloberfläche mit einem Anregungslicht während der Ermüdungsbeanspruchung; - Überwachen des zumindest einen Teils der Bauteiloberfläche während der Ermüdungsbeanspruchung mit einer Überwachungsvorrichtung und/oder durch visuelle Inspektion, um ein von der Indikatorschicht abgestrahltes Lumineszenzlicht zu detektieren, wenn ein solches die Abdeckschicht durchdringt oder wenn die Abdeckschicht die Indikatorschicht zumindest abschnittsweise freigibt.

## Beschreibung

Die Erfindung liegt auf dem Gebiet der Werkstoffwissenschaften, der Materialprüfung und der Betriebsfestigkeitslehre und betrifft die effiziente und zuverlässige visuelle Detektion von Ermüdungsanrissen an Großbauteilen aus Stahl, Aluminium oder ähnlichen Werkstoffen.

Bei ermüdungsbeanspruchten Bauteilen kann eine wechselnde oder schwingende Beanspruchung zu einem Anriss führen, der eine fortschreitende Bauteilschädigung einleitet. Ab diesem Zeitpunkt beträgt die verbleibende Restlebensdauer des Bauteils in vielen Fällen nur noch einen Bruchteil der gesamten Betriebsdauer. Aus Sicherheitsgründen werden daher ermüdungsbeanspruchte Bauteile regelmäßig auf mögliche Anrisse hin inspiziert, um rechtzeitig Gegenmaßnahmen einleiten zu können, da im Allgemeinen Reparatur- und Instandsetzungskosten umso höher ausfallen, je später ein Schaden detektieret wurde. Ähnliches gilt für die Stand- und Betriebssicherheit von Großbauteilen. In diesem Zusammenhang spielt bei Inspektionen die möglichst effiziente und damit zuverlässige und frühzeitige Erkennung von Ermüdungsrissen bzw. Anrissen eine wesentliche Rolle. Eine ähnliche Aufgabe steht auch bei der experimentellen Ermittlung von Anrisslastwechselzahlen von Bauteilen im Labor an, wenn die Lastwechselzahl bis zum Auftreten eines ca. 1mm langen Anrisses (Anrisslebensdauer), möglichst genau und effizient mit Hilfe einer reproduzierbaren Methode bestimmt werden soll. Der Begriff Anrisslebensdauer kennzeichnet in der Betriebsfestigkeitslehre in der Regel die Lebensdauer des Bauteils bis zu der Lastwechselzahl, bei der ein Anriss von ca. 1mm Länge beobachtet wird.

Bereits seit Jahren werden in verschiedenen Bereichen des Bauwesens und des Maschinenbaus für diese Belange die nachfolgend genannten Verfahren eingesetzt:
a) visuelle Inspektion - handnah (evtl. mit optischer Vergrößerungshilfe),
b) Rissdetektoren bzw. Rissdrähte, die auf die betroffene Stellen geklebt werden
c) Ultraschall,
d) Lock in-Thermographie,
e) röntgenographische Verfahren,
f) röntgenomagnetische Methoden,
g) Farbeindringverfahren,
h) Magnetpulververfahren,
i) Wirbelstromverfahren,
j) Verfahren mit elektromagnetischer Induktion.

Die vorbekannten Lösungen sind jedoch für eine Dauerüberwachung von Großbauteilen ungeeignet und erfordern zum Teil einen hohen technischen Aufwand. Außerdem kann selbst die periodisch durchgeführte visuelle Inspektion von Bauteilen mit großen Abmessungen sehr zeitaufwendig sein und nicht immer zuverlässige Ergebnisse liefern. Einschränkungen können sich durch mangelnde Erfahrung der die Inspektion durchführenden Person ergeben. Die verbleibenden Verfahren b) bis j) konzentrieren sich in der Regel auf eine örtlich begrenzte Stelle des Bauteils und setzen somit die genaue Kenntniss des Schadensorts, an dem ein Anriss erwartet wird, voraus.

Wirbelstromverfahren setzen die Kenntnis des Originalzustandes des geprüften Bauteils voraus und sind in Regel auf die Anwendung an vergleichsweise kleinen Elementen beschränkt. Auch wird nicht unmittelbar ein Riss, sondern lediglich eine Änderung der elektrischen Signatur gegenüber dem Sollzustand festgestellt. Die Verfahren gemäß b), d), e), j) und f) sind in der Regel teuer und aufwendig in der Anwendung, insbesondere sind die Verfahren gemäß d), f) und j) sehr teuer und schwierig in der korrekten Anwendung und hinsichtlich der Reproduzierbarkeit erhaltener Ergebnisse. Ultraschallbasierte Verfahren können zwar innere Fehlstellen detektieren, setzen jedoch sowohl für die Reflexions- als auch für die Transmissionanordnung der Ultraschallsensoren eine entsprechend geeignete Geometrie der Proben voraus, die in realen Messsituationen nicht immer gegeben ist. Das betrifft beispielsweise die Prüfung von Kehlnähten. Weiterhin muss ein Riss hier, um überhaupt detektiert werden zu können, eine für das Verfahren detektierbare Orientierung aufweisen. Das gilt ebenso für die röntgenografischen Verfahren.

Die vorgeschlagene Lösung ergänzt die oben beschriebenen Methoden und gestattet eine effiziente, zuverlässige und kostengünstige Dauerüberwachung von ermüdungsbeanspruchten Bauteilen durch die Visualisierung von Anrissen unabhängig von der genauen Kenntnis des Schadensorts. Die Ermüdungsbeanspruchung schließt als Oberbegriff sowohl eine Schwellbeanspruchung, z. B. eine oszillierende Zugbeanspruchung, als auch eine Wechselbeanspruchung, z.B. eine oszillierende Zug-Druck-Beanspruchung, mit ein.

Insbesondere wird ein Verfahren zur Anrissdetektion nach Anspruch 1, eine an diese Verwendung angepasste Vorrichtung gemäß Anspruch 11, und eine Verwendung einer Indikatorschicht mit einseitig darauf aufgebrachter Abdeckschicht nach Anspruch 16 vorgeschlagen. Weitere Ausführungsformen, Modifikationen und Verbesserungen ergeben sich anhand der folgenden Beschreibung und der beigefügten Ansprüche.

Gemäß einer Ausführungsform wird ein Verfahren zur Anrissdetektion an einem ermüdungsbeanspruchten Bauteil vorgeschlagen, umfassend:
- Behandeln zumindest eines Teils einer Bauteiloberfläche des ermüdungsbeanspruchten Bauteils durch Aufbringen eines lumineszierenden Indikators,
   sodass die behandelte Bauteiloberfläche mit einer geschlossenen Indikatorschicht bedeckt ist und die Indikatorschicht fest auf dem zumindest einen Teil der Bauteiloberfläche haftet;
- zumindest abschnittsweises Erzeugen einer Abdeckschicht auf der Indikatorschicht, sodass die abgedeckte Indikatorschicht kein Lumineszenzlicht abgibt;
- Beaufschlagen des zumindest abschnittsweise mit einer abgedeckten Indikatorschicht versehenen Bauteils mit einer Ermüdungsbeanspruchung;
- Beleuchten des zumindest einen Teils der Bauteiloberfläche mit einem Anregungslicht während der Ermüdungsbeanspruchung;
- Überwachen des zumindest einen Teils der Bauteiloberfläche während der Ermüdungsbeanspruchung mit einer Überwachungsvorrichtung und/oder durch visuelle Inspektion, um ein von der Indikatorschicht abgestrahltes Lumineszenzlicht zu detektieren, wenn ein solches die Abdeckschicht durchdringt oder wenn die Abdeckschicht die Indikatorschicht zumindest abschnittsweise freigibt.

Das Erzeugen einer Abdeckschicht umfasst eine thermische, chemische oder mechanische Behandlung zumindest eines Teils der Indikatorschicht. Vorteilhafterweise braucht die zuvor aufgebrachte Indikatorschicht lediglich oberflächlich modifiziert zu werden. Das kann beispielsweise durch ein geeignetes Beflammen oder eine chemische Reaktion der äußeren Oberfläche der Indikatorschicht erfolgen. Beispielsweise kann diese chemische Reaktion durch geeignete Wahl einer Indikatorsubstanz auf die mit der Umgebungsluft in Kontakt tretende äußerste Oberfläche der Indikatorschicht begrenzt sein.

Gemäß einer Modifikation des vorgeschlagenen Verfahrens kann das Behandeln ein Bereitstellen einer Indikatorlösung, umfassend einen lumineszierenden Indikator einschließen. Ebenso kann das Abdecken ein Bereitstellen einer Abdecklösung umfassen, wobei das zumindest abschnittsweise Abdecken dann ein Behandeln der Indikatorschicht mit der Abdecklösung umfasst, wobei die Indikatorschicht und an die Indikatorschicht angrenzende Bereiche der Bauteiloberfläche mit einer geschlossenen Abdeckschicht bedeckt werden. Die so erzeugte Abdeckschicht haftet fest auf der Indikatorschicht und verhindert, dass die Intensität pro Flächeneinheit eines von der abgedeckten Indikatorschicht abgegebenen und mit einer Überwachungsvorrichtung nachweisbaren Lumineszenzlichtes weniger als ein Viertel der Intensität des mit der Überwachungsvorrichtung nachweisbaren Lumineszenzlichtes pro gleicher Flächeneinheit einer freien bzw. nicht mit der Abdecklösung behandelten Indikatorschicht beträgt.

Folgende Überwachungskonzepte sind je nach Aufgabenstellung anwendbar:
- Videoüberwachung mit anschließender Bildauswertung. Dieses Konzept ist insbesondere für Labortests mit nachträglicher Auswertung von Überwachungsaufnahmen geeignet. Alternativ erfolgt der Nachweis durch visuelle Inspektion in situ;
- Regelmäßige visuelle Inspektion unter UV-Beleuchtung im Dunkeln. Dieses Überwachungskonzept ist für Baukonstruktionen mit einer typischerweise langen Risswachstumsphase, z. B. für Brücken, Kranbahnen etc. geeignet;
- Videoüberwachung mit automatischer Bilderkennung und Reaktion (Alarm) bei Bildänderung (geeignet für besonders kritische, sicherheitsrelevante Bauteile in, z. B. Kraftwerken, Chemischen Anlagen oder für besonders kritische Maschinenbauteile).

Vorteile des vorgeschlagenen Verfahrens bestehen in der Robustheit und einfachen Ausführbarkeit des Verfahrens, der Steigerung der Zuverlässigkeit erhobener Befunde sowie der Automatisierbarkeit, beispielsweise unter Verwendung von Algorithmen der automatischen Mustererkennung. Besonders vorteilhaft ist, dass auch flächig und räumlich ausgedehnte Bauteiloberflächen mit relativ geringem Aufwand, sorgfältig und zuverlässig überwacht werden können.

Typischerweise ist der Indikator ausgewählt unter einem Lumineszenz zeigenden Material, insbesondere unter Fluoreszenz oder Phosphoreszenz aufweisenden organischen oder anorganischen Farbstoffen, die beispielsweise im UV-Bereich, bevorzugt im UVA-Bereich (Schwarzlicht), oder im UV-Vis-Bereich absorbieren und zumindest ein Emissionsmaximum aufweisen. Vorteile derartiger Indikatoren ergeben sich aus ihrer breiten Verfügbarkeit, ihrer chemischen Stabilität sowie der problemlosen Verfügbarkeit angepasster Optiken und Filter zur Bilderfassung. Andere Vorteile betreffen die hohe Empfindlichkeit der benannten Farbstoffe für Anregungslicht einer von angepassten Beleuchtungsquellen abgestrahlten Wellenlänge. Bevorzugte Schichtdicken der Indikatorschicht betragen 0,05 µm bis 500 µm, typischerweise 0,1 bis 100 µm, bevorzugt 0,5 bis 100 µm, beispielsweise 25 bis 75 µm. Indikatorschichten der benannten Schichtdicken bieten den Vorteil, dass bereits beim Vorliegen kleinster Risse in der Abdeckschicht eine ausreichende Farbstoffmenge der externen Anregungsstrahlung, beispielsweise Schwarzlicht, zugänglich wird, wobei ein ausreichend hohes Indikatorsignal erzeugt wird. Die auf der Indikatorschicht aufgebrachte oder auf ihr erzeugte Abdeckschicht verhindert den Austritt von Fluoreszenz oder Phosphoreszenz-Licht. Dazu ist die Abdeckschicht undurchlässig im Wellenlängenbereich des vom Lumineszenz-Indikator emittierten Lichts, kann jedoch zumindest teilweise durchlässig sein im Wellenlängenbereich des zur Anregung des Indikators genutzten Lichtes.

Auf Grund des erzielten stoffschlüssigen Verbundes von Bauteiloberfläche, Indikatorschicht und Abdeckschicht werden durch einen Anriss im Bauteil sowohl die Abdeckschicht als auch die Fluoreszenzschicht vom Untergrund her, das heißt vom Bauteil aus, aufgerissen. Ein besonderer Vorteil ergibt sich daraus, dass an den sich öffnenden Flanken der Abdeckschicht hervortretendes Fluoreszenzlicht durch Lichtbeugung und Streulichtanteile besonders gut wahrgenommen werden kann. Damit werden Risskanten besonders deutlich erkennbar. Vorteilhafterweise ermöglicht die Kombination von aufeinander angepasster Indikator- und Abdeckschicht ein großes Signal/Rausch-Verhältnis und damit eine erleichterte Riss- und Anriss-Detektion. Beispielsweise kann das Überwachen bzw. Kontrollieren gemäß dem vorgeschlagenen Verfahren durch kontinuierliche Videoaufnahmen des zumindest einen Teils der Bauteiloberfläche unter Schwarzlicht und die dazu synchrone Erfassung der Lastwechselzahl N erfolgen. Anschließend wird die aufgezeichnete Videosequenz dann hinsichtlich des Auftretens eines Indikatorsignals ausgewertet, insbesondere hinsichtlich des Auftretens eines Lumineszenzlichts an einem aufgerissenen Abschnitt der Indikatorschicht.

Gemäß einer weiteren Ausführungsform umfasst das vorgeschlagene Verfahren weiterhin: - Aufnehmen eines Einzelbildes durch eine Bildaufnahmeeinheit und Zuordnen einer Lastwechselzahl N, wobei sich die Lastwechselzahl N aus einem Zeitpunkt des Aufnehmens des Einzelbildes oder aus einer zum Zeitpunkt des Aufnehmens akkumulierten Anzahl von Lastwechseln des Bauteils ergibt; - Speichern des Einzelbildes mit der ihm zuordenbaren Lastwechselzahl N; - Wiederholen der Schritte Aufnehmen, Zuordnen und Speichern. Vorteile der Verwendung einer Bildaufnahmeeinheit ergeben sich beispielsweise daraus, dass eine großflächige Überwachung der Bauteiloberfläche vorgenommen werden kann.

Während im zyklischen Belastungsversuch unter Laborbedingungen das Auftreten eines Anrisses durch die zu untersuchende Kerbe provoziert wird und der Ort des Auftretens eines Anrisses somit bekannt ist, kann das Entstehen eines Risses unter Praxisbedingungen nur eingeschränkt lokal vorhergesagt werden. Ebenso können unter Praxisbedingungen mehrere Risse an unterschiedlichen Stellen der Bauteiloberfläche auftreten. Mit einer Bildaufnahmeeinheit können unterschiedliche Areale der Bauteiloberfläche synchron überwacht werden. Aus der Wiederholung der Schritte Aufnehmen, Zuordnen und Speichern ergibt sich die vorteilhafte Möglichkeit, das Schädigungsverhalten eines Bauteils auszuwerten und die dabei gewonnenen Erkenntnisse zur Steigerung der Zuverlässigkeit der Inspektion, der Betriebssicherheit oder zur Verminderung der Ausfallrate oder zur Vermeidung von Schadensfällen zu nutzen.

Gemäß einer weiteren Ausführungsform wird ein Verfahren vorgeschlagen, das weiterhin umfasst: - Analysieren des Einzelbildes, wobei das Analysieren ein Ermitteln eines Vergleichswertes umfasst, der einen Vergleich eines Intensitätswertes mit einem vorgegebenen Intensitätsschwellwert umfasst, wobei die Wellenlänge oder der Wellenlängenbereich des Intensitätswertes und des Intensitätsschwellwertes zumindest teilweise einem Emissionsspektrum des Indikators entspricht; - optionales Speichern des Vergleichswertes mit der dem Einzelbild zugeordneten Lastwechselzahl N; und - Ausgeben eines Signals durch die Überwachungsvorrichtung, wenn der gemessene Intensitätswert den Intensitätsschwellwert übersteigt. Dabei kann das Signal ein Alarmsignal sein.

Vorteile dieser Verfahrensschritte bestehen darin, dass der von der Einzelbildanalyseeinheit erfasste Wellenlängenbereich enger ist, und damit zur Anregung der Lumineszenz genutztes Licht die Empfindlichkeit einer Detektionseinheit der Einzelbildanalyseeinheit nicht einschränkt. Im Ergebnis steigt die Empfindlichkeit des Riss-, bzw. Anriss-Nachweises.

Gemäß einer weiteren Ausführungsform umfasst das vorgeschlagene Verfahren das Ausgeben eines Signals durch die Überwachungsvorrichtung, wenn die Überwachungsvorrichtung ein Indikatorsignal detektiert oder wenn bei einer visuellen Kontrolle des zumindest einen Teils der Bauteiloberfläche ein Indikatorsignal, beispielsweise ein Lumineszenzlicht festgestellt wird. Typischerweise handelt es sich bei dem festgestellten Indikatorsignal um ein von einer Indikatorsubstanz an der Rißkante zwischen dunkel erscheinendem Material und dunkel erscheinender Abdeckschicht abgestrahltes Lumineszenzlicht. Das hohe Signal/Rausch-Verhältnis gestattet einen erleichterten Nachweis technischer Anrisse

Gemäß einer weiteren Ausführungsformwird ein Verfahren zum Nachweis und der Verfolgung des Wachstums von Rissen in ermüdungsbeanspruchten Bauteilen vorgeschlagen. In diesem Zusammenhang wird unter einer Ermüdungsbeanspruchung sowohl eine Schwellbeanspruchung im Zug- und Druckbereich als auch eine Wechselbeanspruchung im Zug- und im Druckbereich verstanden. Gemäß dem vorgeschlagenen Verfahren ist das Bauteil einer mechanischen Ermüdungsbeanspruchung ausgesetzt oder kann ebenso einer zyklischen thermischen Belastung ausgesetzt sein, die in einer mechanischen Ermüdungsbeanspruchung resultiert.

Vorteile ergeben sich daraus, dass das Verfahren unabhängig vom jeweiligen Belastungsszenario ist. Es gestattet prinzipiell den skalenübergreifenden Nachweis von Ermüdungsschäden sowohl an Großbauteilen, beispielsweise im Bauwesen, als auch an Kleinbauteilen, beispielsweise in der Mikrosystemtechnik oder der Mikroelektronik. Weitere Vorteile bestehen damit in der universellen Einsetzbarkeit des Verfahrens, die weitestgehend unabhängig von der Größe des Bauteils ist.

Gemäß einer weiteren Ausführungsform wird ein Verfahren vorgeschlagen, wobei der zumindest eine Teil der Bauteiloberfläche, der mit einer Indikatorschicht und einer Abdeckschicht versehen wird ein Metall, eine metallische Legierung, ein Kohlenstoffbasiertes Verbundmaterial oder ein Polymermaterial umfasst.

Das vorgeschlagene Verfahren ist damit besonders angepasst für den Nachweis von Rissen mit einem stabilen Risswachstum d.h. sich unter Last öffnenden, ggf. danach wieder teilweise oder vollständig schließenden Rissen. Die aufgeführten Materialien verfügen über eine gewisse Duktilität und zeichnen sich typischerweise durch ein in Abhängigkeit vom jeweiligen Belastungszustand veränderliche Rissweite aus.

Gemäß einer weiteren Ausführungsform wird ein Verfahren vorgeschlagen, wobei die Indikatorlösung einen in einem Indikator-Lösungsmittel gelösten, suspendierten oder dispergierten anorganischen oder organischen fluoreszierenden oder phosphoreszierenden Farbstoff umfasst.

Vorteile ergeben sich aus der Möglichkeit, für einen gewünschten Indikatorfarbstoff mit einer charakteristischen Emissionswellenlänge ein optimales Lösungsmittel bereitstellen zu können - und umgekehrt. Die breite Palette der verfügbaren Indikatorsubstanzen und in einem schmalen Wellenlängenbereich, der beispielsweise lediglich 100 nm, bevorzugt 50 nm umfasst, beispielsweise nur 50 nm Bandbreite aufweist, besteht darin dass die Bildaufnahmeeinheit oder Zubehörteile wie beispielsweise Filter optimal an die jeweilige Indikatorsubstanz und die zu ihrer Anregung verwendete Beleuchtungseinheit angepasst werden kann.

Gemäß einer weiteren Ausführungsform wird ein Verfahren vorgeschlagen, wobei die Abdecklösung einen in einem Abdecker-Lösungsmittel gelösten, suspendierten oder dispergierten Abdecker umfasst.

Das bietet den Vorteil, eine homogen geschlossene Abdeckschicht auf der Indikatorschicht bereitstellen zu können.

Gemäß einer weiteren Ausführungsform wird ein Verfahren vorgeschlagen, wobei die Abdecklösung ein Korrosionsschutzanstrichstoff ist. Gemäß einer Ausführungsvariante wird die Indikatorschicht unter einer Korrosionsschutzschicht aufgebracht.

Vorteile ergeben sich dann beispielsweise daraus, dass die Indikatorschicht an ermüdungsbeanspruchten Abschnitten einer Bauteiloberfläche aufgetragen werden kann, die ein besonderes Risiko der Rissbildung aufweisen. Selbst wenn Korrosionsschutzschichten typischerweise eine gewisse Duktilität besitzen und den Bewegungen der abgedeckten Bauteiloberfläche folgen, wird ein Riss der Bauteiloberfläche, der sich in die Korrosionsschutzschicht fortsetzt, so leichter nachweisbar.

Gemäß einer weiteren Ausführungsform wird ein Verfahren vorgeschlagen, wobei das Indikatorlösungsmittel ein Acrylat, insbesondere ein Methylacrylat bzw. Methacrylat, ein Ethylacrylat bzw. Acrylsäureethylester oder ein Cyanacrylat ist. Synonyme Bezeichnungen für ein Cyanacrylat sind in diesem Zusammenhang Cyanoacrylat und Alkylcyanacrylat bzw. Alkylcyanoacrylat. Dabei ist das Cyanacrylat ausgewählt unter einem cyanacrylatbasiertem Klebstoff, umfassend: 2-Cyanacrylsäuremethylester bzw. Methyl 2-Cyanacrylat, 2-Cyanacrylsäureethylester bzw. Ethyl-2-Cyanacrylat, n-Butylcyanacrylat, Isobutylcyanacrylat, Octylcyanacrylat, oder 2-Octylcyanacrylat.

Besondere Vorteile ergeben sich daraus, dass die vorbezeichneten Verbindungen als schnell polymerisierende Klebstoffe verwendet werden. Deshalb sind sie gut verfügbar. Beispielsweise wird Methylacrylat, ggf. unter Zusatz eines oder mehrerer weiterer Acrylate, mit geeigneten Peroxiden zu einem schnell härtenden Kleber verarbeitet. Ein entsprechender Zwei-Komponenten-Kleber ist beispielsweise ein unter dem Handelsnamen X-60 bekannter Industriekleber. Ebenso können aber auch Ein-Komponenten-Kleber, beispielsweise ein Ein-Komponenten-Cyanacrylat-Klebstoff als Lösungsmittel für das genutzte Nachweisreagenz dienen. Derartige Klebstoffe härten vorteilhafterweise in dünnen Schichten unter Absorption von Feuchtigkeit aus der Umgebungsluft.

Diese Substanzen werden beispielsweise als schnellhärtende oder sogenannte Sekunden-Kleber in unterschiedlichen technischen oder medizinischen Anwendungsbereichen eingesetzt. Sie sind kommerziell verfügbar und kostengünstig. Die Viskosität der Indikatorlösung kann beispielsweise durch Zusatz organischer Lösungsmittel modifiziert und somit der jeweiligen Oberfläche, insbesondere der Rauheit der zu überwachenden Oberfläche angepasst werden. Insbesondere kann die Viskosität unter 1 Pas gesenkt werden. Eine ausreichend dünnflüssige Indikatorlösung bietet den Vorteil, auch auf rauhen Bauteiloberflächen, beispielsweise auf unlackierten Oberflächen oder lediglich eine dünne Flugrostschicht aufweisenden Eisen- oder Stahlteilen gut zu haften. Ebenso haften derartige Indikatorlösungen gut auf phosphatierten oder anderweitig vor Korrosion geschützten Oberflächen. Derartige Oberflächen sind beispielsweise in Brückenunterkonstruktionen anzutreffen.

Gemäß einer modifizierten Ausführungsform kann eine Komponente eines Zwei-Komponenten-Klebers als Lösungsmittel des Indikators dienen. Der Zwei-Komponenten-Kleber kann ausgewählt sein unter den vorgenannten Acrylat- und Cyanacrylat-Klebstoffen, ebenso aber auch unter Epoxidharz-Klebstoffen. Die Klebstoffe können dabei sowohl heiß härtende Klebstoffe, als auch kalt härtende Klebstoffe sein. Bevorzugt werden Komponenten kalthärtender Klebstoffe als Lösungsmittel des Lumineszenz- oder Fluoreszenzfarbstoffs verwendet. Diese Stoffe sind leicht verfügbar und geeignet zur Bereitstellung einer ausreichend dünnflüssigen Lösung eines Indikatorfarbstoffes, insbesondere der Lösung eines Fluoreszenzfarbstoffes für die hier vorgeschlagene Verwendung. Unter dünnflüssig wird in diesem Zusammenhang eine Viskosität nahe der des Wassers verstanden, das bei 20°C eine Viskosität von 1Pas aufweist. Ein weiterer Vorteil dieser Verbindungen ist ihr rasches Aushärten auf zahlreichen Untergründen, die als Bauteiloberflächen in Betracht kommen, insbesondere auf metallischen Oberflächen.

Beispiele für metallische Bauteiloberflächen sind Oberflächen von Aluminiumbauteilen, elektrisch oxidierte (eloxierte) Aluminium-Oberflächen, Eisenoberflächen, Stahloberflächen, Messing-, Kupfer- und Bronze-Oberflächen, aber auch phosphatierte oder vernickelte Schichten.

Gemäß einer weiteren Ausführungsform wird eine Vorrichtung zur Anrissdetektion an einem wechselbeanspruchten Bauteil vorgeschlagen, umfassend: - eine Beleuchtungseinheit zur Anregung der Indikatorschicht, - eine Bildaufnahmeeinheit, - eine Speichereinheit, - eine zentrale Verarbeitungseinheit CPU; und optional eine Ausgabeeinheit.

Eine derartige Vorrichtung bietet den Vorteil, dass sie aus handelsüblichen Komponenten zusammengestellt werden kann. Damit kann die Vorrichtung kostengünstig den in der Praxis ggf. stark voneinander abweichenden Messsituationen angepasst werden. Beispielsweise kann eine zentrale Verarbeitungseinheit die von verschiedenen Einzelbildaufnahmeeinheiten erfassten Einzelbilder an die Speichereinheit weiterleiten und deren Speichern zusammen mit einer jeweils zugeordneten Einheit, beispielsweise einem Zeittakt, einer Zeit, einer Lastwechselzahl oder einem anderen extern getriggerten Ereignis verknüpfen. Besondere Anforderungen des koordinierten und zeitlich abgestimmten Zusammenwirkens der bekannten Komponenten ergeben sich aus der Verwendung einer an die Anrissdetektion angepassten Verarbeitungseinheit CPU.

Gemäß einer weiteren Ausführungsform wird eine Vorrichtung zur Anrissdetektion an einem ermüdungsbeanspruchten Bauteil vorgeschlagen, wobei die Beleuchtungseinheit bzw. eine Anregungslichtquelle, ausgewählt ist unter: - einer Lampe (Schwarzlichtquelle), die Licht unterhalb 410 nm, vorzugsweise im Spektralbereich von 315 nm bis 380 nm emittiert; - einer Lampe, die Licht im Spektralbereich 280 nm bis 315 nm emittiert; - einer Lichtquelle, die Licht im Wellenlängenbereich von 380 nm bis 780 nm emittiert.

Vorteile der Verwendung von Schwarzlicht ergeben sich beispielsweise daraus, dass die überwachte Bauteiloberfläche großflächig beleuchtet und somit großflächig ggf. vorhandene Anrisse detektiert werden können. Eine Inspektion der jeweiligen Struktur kann in der Nacht vorgenommen werden, ohne dass die Funktionalität des Bauteils beeinträchtigt werden muss. Das Bauteil kann in eingebautem Zustand oder im laufenden Betrieb überwacht werden. Es ist ebenso denkbar, dass zur natürlichen Öffnung der Anrisse das Tragwerk für die Inspektion gesondert belastet wird, wie z. B. häufig bei der radiografischen Rissdetektion. Dadurch lassen sich mögliche Risse in der Aufnahme deutlich darstellen und leichter identifizieren. Die Auswahl angepasster Anregungslichtquellen gestattet in Kombination mit der Verwendung unterschiedlicher Indikatoren die gleichzeitige Detektion bzw. Überwachung von Rissbildungen an verschiedenen Bauteilen, wenn die Oberflächen der verschiedenen Bauteile selektiv mit unterschiedlichen Indikatorsubstanzen beschichtet sind.

Gemäß einer weiteren Ausführungsform wird eine Vorrichtung zur Anrissdetektion vorgeschlagen, wobei die Bildaufnahmeeinheit eine Detektionseinheit umfasst, die angepasst ist, ein Einzelbild des ermüdungsbeanspruchten Bauteils in einem Spektralbereich aufzunehmen, der ein Emissionsspektrum des Indikators zumindest teilweise umfasst und das aufgenommene Einzelbild an eine Speichereinheit zu übergeben.

Vorteile der Verwendung einer Detektionseinheit ergeben sich in der Automatisierung der Messungen bzw. der Versuchsdurchführung. Beispielsweise kann eine geeignete Photodioden-Zeile oder ein Photodioden-Array oder ein angepasster optoelektronischer Wandler zur Rissdetektion verwendt werden, wobei der entsprechende Wandler selektiv für den Wellenlängenbereich ist, der zumindest abschnittsweise einem Emissionsspektrum des Indikators entspricht und vorzugsweise das Emissionsmaximum des Indikators umfasst.

Gemäß einer weiteren Ausführungsform der Vorrichtung umfasst dieselbe weiterhin einen Zähler zur Ausgabe einer Lastwechselzahl N. Das erlaubt die einfache Rückverfolgung des Riss-Nachweises bzw. die Zuordnung eines Anrisses zu einer bestimmten Lastwechselzahl N. (14) Gemäß einer weiteren Ausführungsform wird eine Vorrichtung zur Anrissdetektion vorgeschlagen , die weiterhin eine zentrale Steuereinheit bzw. CPU umfasst, wobei die CPU eingerichtet ist einen Datenaustausch zwischen Bildaufnahmeeinheit, Zähler, Speichereinheit und optional der Einzelbildanalyseeinheit und der Detektionseinheit zu steuern, sodass ein Anriss mit hoher Zuverlässig detektiert werden kann. Die vorgeschlagene Lösung ist besonders für die Material- und Werkstoffforschung im Versuchslabor und die retrospektive Analyse von gespeicherten Versuchsdaten geeignet.

Gemäß einer weiteren Ausführungsform wird die Verwendung einer Doppelschicht, umfassend eine erste und eine zweite Schicht, zur Detektion eines Risses in einer Bauteiloberfläche vorgeschlagen, wobei die erste Schicht ein polymerisiertes Cyanacrylat umfasst, das einen homogen verteilten Fluoreszenz- oder Lumineszenzfarbstoff aufweist und die zweite Schicht eine lichtundurchlässige, die erste Schicht einseitig bedeckende Abdeckschicht umfasst, wobei die erste Schicht stoffschlüssig mit der Bauteiloberfläche verbunden wird und die zweite Schicht bei Beleuchtung mit Schwarzlicht daraufhin inspiziert und/oder überwacht wird, ob der Fluoreszenz- oder Lumineszenzfarbstoff zumindest abschnittsweise sichtbar wird und damit das Auftreten eines Risses in der Bauteiloberfläche anzeigt.

Vorteile dieser Ausführungsform ergeben sich daraus, dass die Doppelschicht ein gesondertes Aufbringen von Indikatorschicht und Abdeckschicht überflüssig macht. Die Doppelschicht ist angepasst, stoffschlüssig mit zumindest einem Teil der Bauteiloberfläche verbunden zu werden. Das kann durch einfaches Aufkleben mit einem Klebstoff erfolgen, oder als besonderes Tape oder kann ebenso durch das Aufpressen einer geeignet angepassten Indikatorschicht erfolgen, kann aber auch unter Erwärmung mit Hilfe eines Heißluftgebläses, oder mit Hilfe eines Bügeleisens erfolgen. Vorteile bestehen in der leichten Anwendbarkeit einer derartigen Doppelschicht unter Praxisbedingungen, beispielsweise an einem Bauwerk, einer Brücke, einer Kranbahn, oder einer mikroelektronischen Baugruppe oder mikrosystemtechnischen Komponente.

Die vorstehend beschriebenen Ausführungsformen können beliebig miteinander kombiniert werden.

Die beiliegenden Figuren veranschaulichen das beschriebene Ausführungsbeispiel und dienen zusammen mit der Beschreibung der Erläuterung der Prinzipien der Erfindung.

Fig. 1 zeigt eine zu Testzwecken gekerbte Zugprobe, die in einer Prüfmaschine eingespannt ist. Sie ist bereits gemäß der beschriebenen Vorgehensweise an der Kerbe präpariert.

Fig. 2 zeigt die gekerbte Zugprobe wie in Fig.1, jedoch im abgedunkelten Versuchsraum bei Beleuchtung mit Schwarzlicht.

Fig. 3 zeigt ein Standbild der Prüfanordnung nach Ablauf von 183.941 Lastwechseln, wobei im Standbild der Videoaufnahme noch kein Anriss erkennbar ist.

Fig. 4 zeigt ein Standbild bei Lastwechsel 184.072 mit beginnender Rissbildung, die schwach erkennbar ist.

Fig. 5 zeigt ein Standbild der Prüfanordnung bei Lastwechsel 184.429 mit deutlich erkennbarem Anriss.

Fig. 6 zeigt ein Standbild bei Lastwechsel 184.564.

Fig. 7 zeigt den Anriss in seiner Länge nach 184.808 Lastwechseln.

Fig. 8 zeigt die Anrisslänge kurz vor dem Stoppen des Versuchs bei Lastwechsel 184.996.

Fig. 9 zeigt die in Fig. 8 abgebildete Probe nach dem Stoppen des Versuchs unter optimierten optischen Bedingungen der Fluoreszenz im Schwarzlicht aus einer anderen Perspektive.

Fig. 10 belegt mittels Farbeindringverfahren die zuvor fluoreszenzoptisch registrierte Rissbildung am selben Probenabschnitt und zum selben Zeitpunkt wie in den Fign. 8 und 9 abgebildet.

Fig. 11 zeigt die Rissdetektion mittels des vorgeschlagenen Lumineszenzverfahrens an einer geschweißten Probe in einem Screen shot (Einzelstandbild) einer unter UV-Beleuchtung aufgenommenen Videosequenz.

Fig. 12 bestätigt mittels Farbeindringverfahren die zuvor mittels Lumineszenz registrierte Rissbildung an der geschweißten Probe aus Fig. 11.

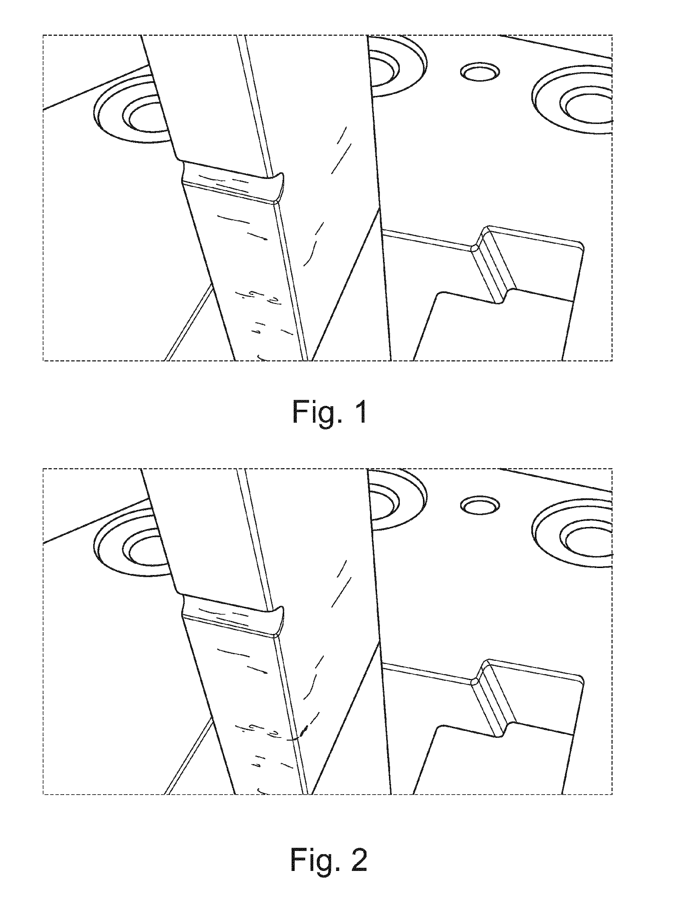

Insbesondere zeigt Fig.1 eine zu Testzwecken gekerbte und die in einer Prüfmaschine eingespannte Zugprobe aus handelsüblichem Baustahl. Durch eine zyklische Belastung der Probe wird ein Ermüdungsriss an der Kerbe initiiert. Im Bereich der Kerbe wurde die Probe gemäß dem vorgeschlagenen Verfahren vor der zyklischen Belastung mit einer fluoreszierenden Beschichtung und einer schwarzen Abdeckung versehen.

Fig. 2 zeigt die gekerbte Zugprobe wie in Fig.1, jedoch unter UV-Beleuchtung im abgedunkelten Versuchsraum vor Versuchsbeginn. Das gezeigte Bild wurde mit einer Videokamera aufgenommen. Wie ersichtlich, gelangt auf Grund der schwarzen Abdeckung kein Fluoreszenzlicht an die Oberfläche.

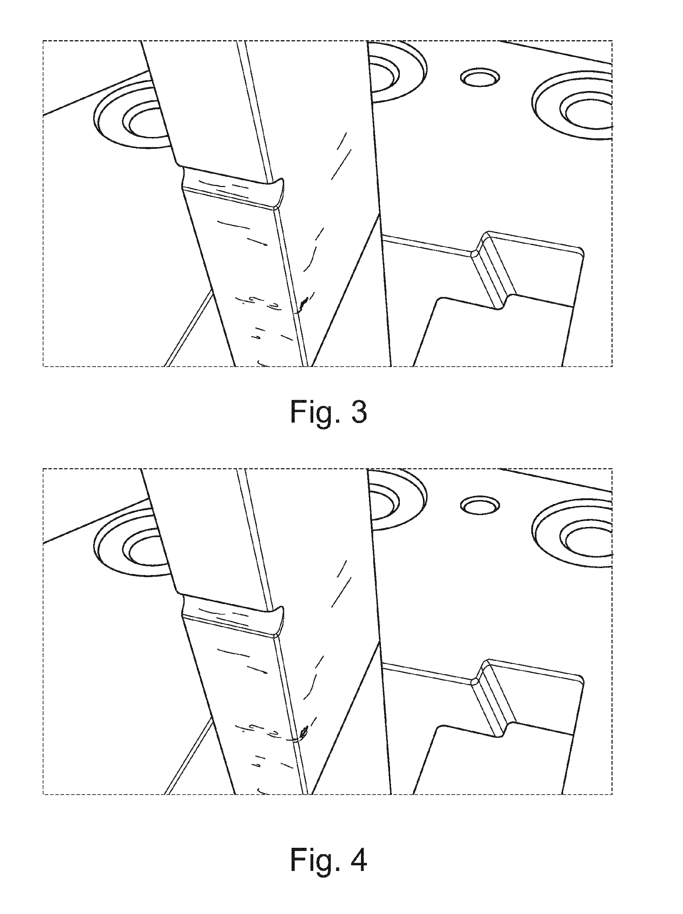

Fig. 3 zeigt die gekerbte Zugprobe nach dem Einsetzen einer zyklischen Belastung bei Lastwechsel 183.941. Es ist noch kein Anriss erkennbar.

Fig. 4 zeigt die Prüfanordnung bei Lastwechsel 184.072. Der grün schimmernde Abschnitt der Rissüberwachungsbeschichtung zeigte in der Videoaufnahme bereits die erste Beschädigung an, die auf einen darunter liegenden Anriss schließen ließ. Die Beschädigung ist im Screen shot hier kaum erkennbar.

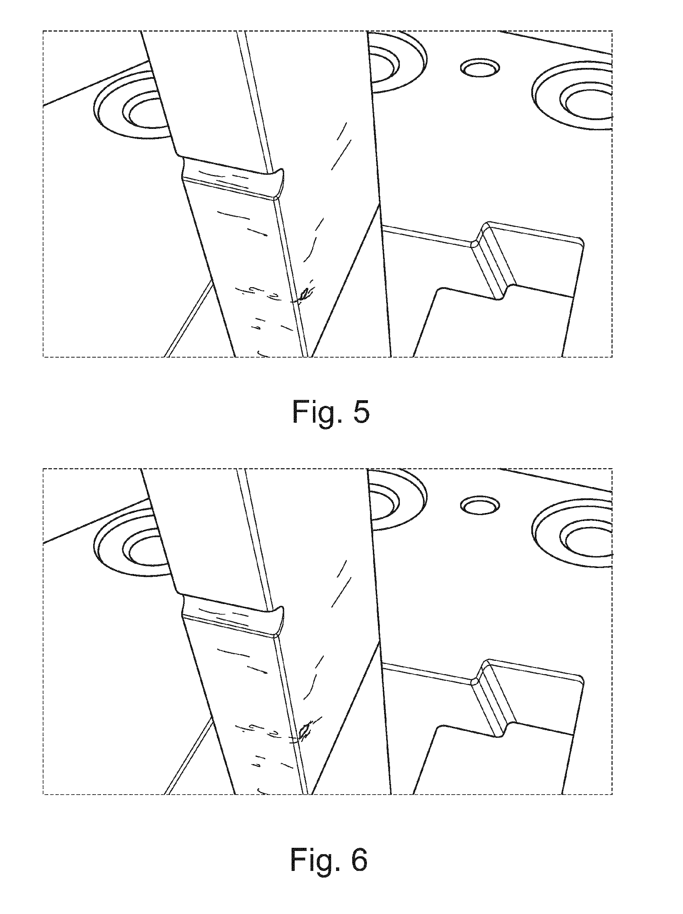

Fig. 5 zeigt die Prüfanordnung bei Lastwechsel 184.429. Der Anriss ist nun bereits auch im Screen shot deutlich erkennbar.

Fig. 6 zeigt die Prüfanordnung bei Lastwechsel 184.564. Das gegenüber den vorausgehenden Standbildern erfolgte Risswachstum kann nun bereits klar erkannt und durch Einzelbildvergleich verfolgt werden.

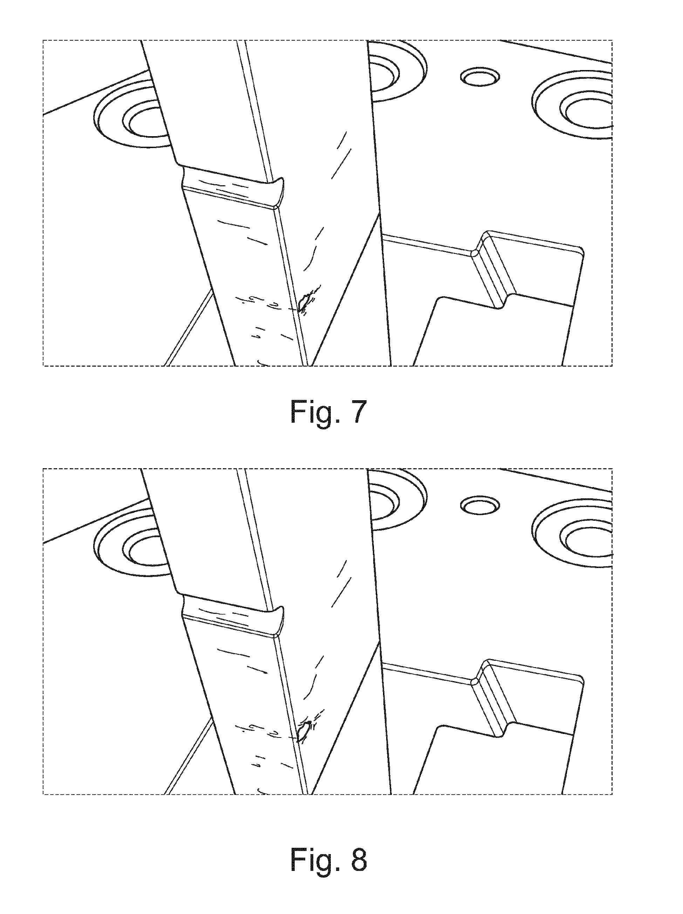

Fig. 7 zeigt den Anriss in einer deutlich erkennbaren Länge nach 184.808 Lastwechseln und Fig. 8 zeigt die Anrisslänge bei Lastwechsel 185.996.

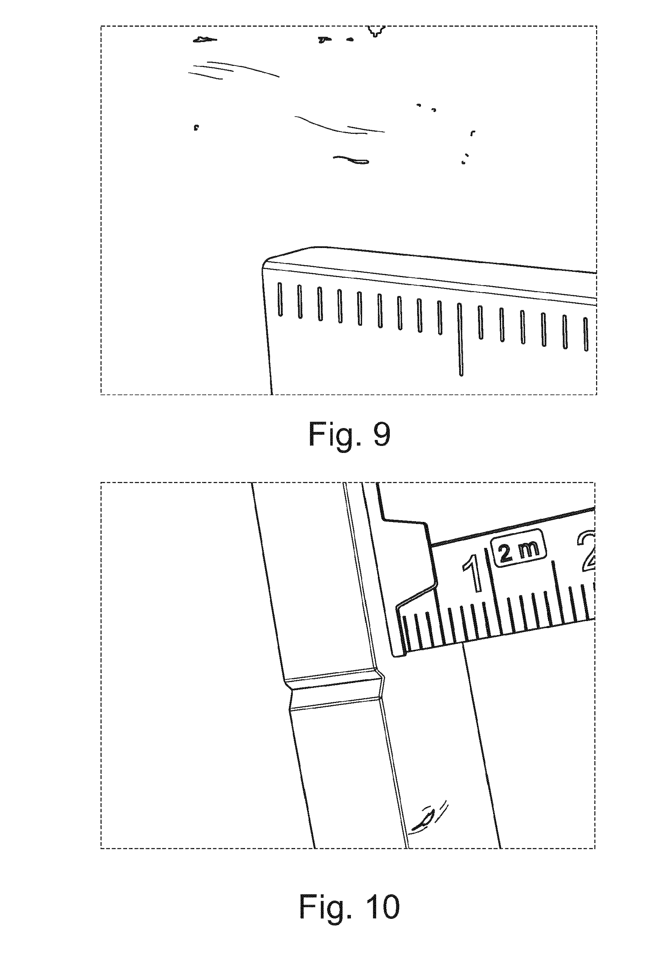

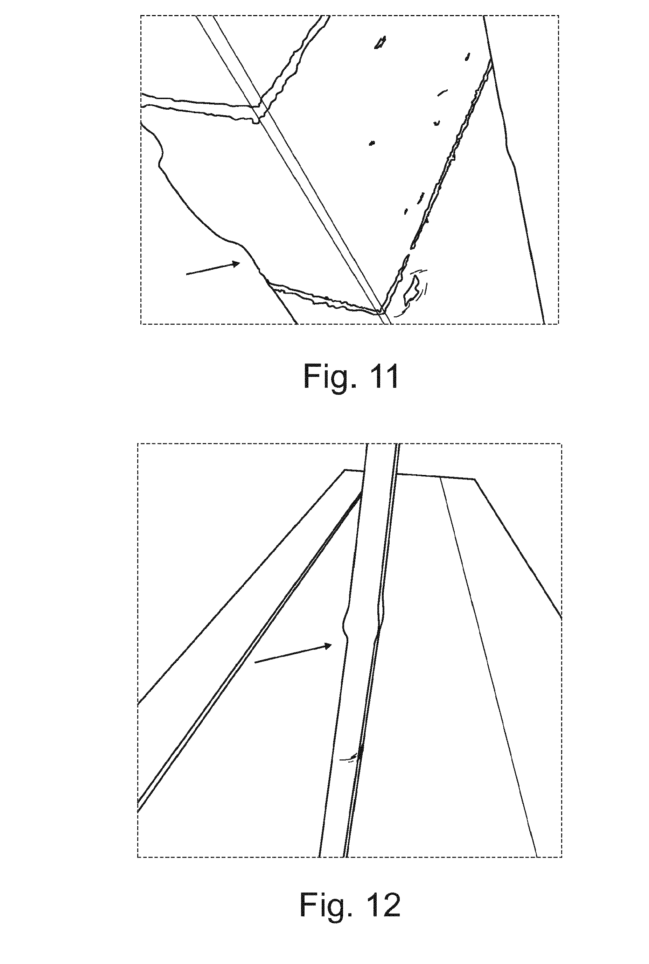

Die Fign. 1 bis 10 zeigen ein und denselben Prüfling, wobei der Rissnachweis in den Figuren 1 bis 9 mit Hilfe des hier beschriebenen Verfahrens und in Fig. 10 zur Kontrolle mittels Farbeindringverfahren erfolgte. Die Fig. 9 unterscheidet sich von den Fign. 1 bis 8 in Hinsicht auf die Anordnung der Bildaufnahmeeinheit und der Schwarzlichtquelle zueinander. In den Fign. 8, 9 und 10 ist derselbe Prüfling nach Abbruch der Ermüdungsbeanspruchung gezeigt. Nachdem die Abdeckschicht und die Indikatorschicht vorsichtig vom Prüfling entfernt wurden, ist die Oberfläche des Prüflings mit Hilfe des einleitend unter g) erwähnten Farbeindringverfahrens untersucht worden. Die dabei deutlich hervortretende Rotfärbung belegt zweifelsfrei das Vorhandensein des Anrisses und bestätigt die Eignung des vorgeschlagenen Verfahrens zum Rissnachweis. Die Fign. 11 und 12 belegen analog, an Hand des auf eine geschweißte Probe angewandten Methodenvergleichs, die Eignung des vorgeschlagenen Nachweisverfahrens für die kontinuierliche Überwachung ermüdungsbeanspruchter geschweißter Bauteile. Der Pfeil in Fig. 11 kennzeichnet einen im Überwachungsvideo lumineszierenden Anriss. In Fig. 12 wurde mittels Farbeindringverfahren das Vorliegen eines Anrisses bestätigt (vgl. Pfeil). Schweißverbindungen gelten unter Praxisbedingungen in der Regel als ermüdungskritisch, so dass die kontinuierliche Überwachung zur zuverlässigen Anrissdetektion an Schweißungen von besonderer praktischer Bedeutung ist. Wie die Fign. 11 und 12 belegen, eignet sich das hier beschriebene Verfahren vorteilhafterweise auch zum Rissnachweis an Schweißungen.

Gemäß einem konkreten Ausführungsbeispiel wird eine ermüdungskritische Bauteiloberfläche eines Tragwerks (z. B. die Schweißnähte einer ermüdungsbeanspruchten Konstruktion) mit einer Indikatorschicht versehen. Die Indikatorschicht umfasst eine Mischung aus einem Schnellklebstoff X 60 der Fa. HBM, Deutschland und ein fluoreszierendes Pulver, das in der Komponente B des Zweikomponenten-Klebers eingerührt oder alternativ dem angemischten Kleber zugesetzt wird. Als Fluoreszenzindikator diente ein Oxazinonderivat, das als fluoreszierendes Pigment beim Wertpapierdruck Verwendung findet (Handelsname: Cartax CXDP, Hersteller Clariant, Deutschland). Das dünnflüssige Gemisch wird mit Hilfe eines Spatels oder eines Pinsels dünn auf die Bauteiloberfläche aufgetragen. Nach dem Trocknen beträgt die Schichtdicke etwa 50 µm und haftet stoffschlüssig auf dem darunter liegenden Bauteil. Alternativ sind andere Indikatorsubstanzen, beispielsweise fluoreszierende Oxide oder Phosphore einsetzbar.

Anschließend wird die Indikatorschicht abgedeckt oder deren oberste Schicht durch eine thermische oder chemische oder mechanische Behandlung undurchlässig für Lumineszenzlicht gemacht. Das kann beispielsweise durch einfaches Übermalen mit einem schwarzen Markierstift der Marke Edding erfolgen (Hersteller Edding Deutschland). Alternativen dazu sind lösliche Farbstoffe oder eine Mischung verschiedener löslicher Farbstoffe oder Pigmente die in einer Lösung, Suspension oder Dispersion aufgetragen werden. Vorteilhafterweise hat der Farbstoff oder die Farbstoffmischung eine schwarze oder eine tiefblaue Farbe. Theoretisch ist jede Farbe denkbar, sie ist vorteilhafterweise undurchlässig für das Licht der Indikatorschicht und soll vor allem unter Schwarzlicht einen guten Kontrast zum Indikatorfarbstoff abgeben. Im Ausführungsbeispiel zeigt sich die hellgrüne Farbe der Indikatorschicht gegenüber der schwarz erscheinenden Deckschicht sehr gut. Gemäß bevorzugten Ausführungsformen kann die den Abdecker enthaltende Lösung ausgewählt sein unter einer zur permanenten Beschriftung von Oberflächen vorgesehenen Tinte oder Nachfülltinte für Faserstifte. Ebenso kann ein schwarzes Pigment oder eine schwarze Tinte in einem schnell härtenden Klebstoff oder in einer Komponente eines schnell härtenden Klebstoffs gelöst werden. Die so erhaltene Abdecker-Lösung wird dann dünn und deckend auf die abgebundene bzw. ausgehärtete Indikatorschicht aufgetragen und haftet darauf stoffschlüssig.

In einem anschließenden Schritt wird nach dem Aushärten der Schichten sodann das Bauteil mit einer UV-Lampe bei Dunkelheit beleuchtet. Durch die im UV-Wellenlängenbereich angeregte Lumineszenz der Indikatorsubstanz werden kleinste Anrisse gut sichtbar, sobald die Deckschicht durch einen Anriss beschädigt wird. Insbesondere sorgt die Lichtstreuung aus den Rissufern der Fluoreszenzschicht für eine Vergrößerungswirkung und bringt Anrisse deutlich zum Vorschein. Daraus ergibt sich eine gesteigerte Nachweisempfindlichkeit.

Beispielsweise kann eine Überwachungsvorrichtung im Labor zwei Webcams für eine rundum Überwachung der Probe umfassen, die mit einem geeigneten Rechner umfassend eine Betriebssoftware für die Webcams verbunden sind und den Verlauf des Ermüdungsversuchs und den Zeitpunkt des sichtbaren Anrisses aufzeichnen. Wenn beide Seiten der Probe unter permanenter Beleuchtung mit Schwarzlicht überwacht werden, können nach dem Versagensbruch des Prüfkörpers die gespeicherten Bilder ausgewertet werden. Um das Auftreten eines Risses einer Lastwechselzahl zuordnen zu können, kann beispielsweise ein Zählwerk oder eine Uhr in einem oder beiden Bildausschnitten der netzwerkfähigen Kameras angeordnet sein. Beispielsweise zeichnen die Kameras die Videolaufzeit auf, um bei der Bildanalyse auf die Anrisslastwechselzahl schließen zu können. Moderne Prüfmaschinen verfügen sogar über einen Ausgang zur Ausgabe des Lastwechselzahls als elektrisches Signal an eine externe LED-Digitalanzeige, welche im Bild positioniert werden kann. Dadurch kann die Bildanalyse weiter vereinfacht werden. Ebenso ist die Positionierung eines zweiten kleinen Monitors, der die Daten der Versuchssteuerung inklusive Lastwechselzahl zeigt, im Bild möglich.

Ein besonderer Vorteil der beschriebenen Ausführungsformen besteht in ihrer Einfachheit und Robustheit sowie der großflächigen Prüfung und Überwachung von potenziell rissgefährdeten Stellen einer Konstruktion im Betrieb. Eine derartige Überwachung im Betrieb kann bisher nur durch visuelle Inspektion angegangen werden. Die Erfindung unterstützt die visuelle Inspektion und bewirkt dabei eine signifikante Steigerung der sogenannten POD (Probabilitiy Of Detection). Sie stellt somit eine effiziente Methode dar, die ebenso in Kombination mit einer Videoüberwachung und den herkömmlichen Bilderkennungsverfahren eine automatische und permanente Rissüberwachung von ermüdungsbeanspruchten Bauteilen unter Betriebsbedingungen möglich macht.

Die Kombination von UV-Beleuchtung und einer fluoreszierenden Substanz ist bereits seit Jahren gemäß den oben benannten Verfahren g) und h) bekannt, allerdings nur anwendbar bei bereits angerissenen Bauteilen. Ebenso ist diese Anwendung von Fluoreszenzfarbstoffen und Pulvern auf die Stellen begrenzt, wo das Vorliegen eines Risses bereits vermutet wird. Außerdem sind die Funktionsprizipien der Verfahren g) und h) vollständig anders. Entgegen der oben aufgelisteten Verfahren g) und h) benötigt das vorgeschlagene Verfahren zur Visualisierung eines Risses weder ein Kontrastmittel noch eine Magnetisierung des Werkstoffs an der Rissstelle. Außerdem muss für die Verfahren g) und h) bereits ein Riss vorhanden sein, somit sind sie für eine Überwachung nicht sinnvoll bzw. nicht praktikabel.

Bei der vorgestellten Vorgehensweise ist die fluoreszierende oder phosphoreszierende Substanz als großflächige Deckschicht permanent auf dem ungerissenen Bauteil vorhanden und wird quasi als eine "Rissüberwachungsbeschichtung " eingesetzt, die jederzeit bei Dunkelheit geprüft werden kann. Ein weiterer Vorteil liegt in der Einfachheit der Prüfung, die kaum Anforderungen an eine spezielle Personalschulung stellt.

Wirtschaftliche Vorteile bestehen in einer erleichterten Bauwerksinspektion und der Steigerung ihrer Zuverlässigkeit. Damit geht eine Erhöhung der Tragsicherheit von Konstruktionen und Bauwerken einher. Ein entscheidender praktischer Vorteil des vorgeschlagenen Verfahrens besteht darin, dass zur natürlichen Öffnung der bereits vorhandenen Anrisse eines Tragwerkes, dieses Tragwerk zu Inspektionszwecken gesondert belastet wird, wie z. B. bei der radiografischen Rissdetektion. Dadurch lassen sich bereits vorhandene Risse deutlich darstellen und leichter identifizieren.

Wissenschaftliche Vorteile ergeben sich daraus, dass bei Ermüdungsversuchen in der Material- und Baustoffkunde die Anrisslastwechselzahl sehr genau, effizient und zuverlässig ermittelt werden kann. Aus deren präziser Kenntnis ergibt sich unmittelbar eine gesteigerte Zuverlässigkeit von Lebensdauervoraussagen, die auf der Basis von Rechenmodellen getroffen werden, welche an experimentellen Untersuchungen kalibriert werden.

Weitere wesentliche Vorteile ergeben sich aus der Standardisierbarkeit des vorgeschlagenen Mess- und Überwachungsverfahrens.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

## Patentansprüche

1. Verfahren zur Anrissdetektion an einem ermüdungsbeanspruchten Bauteil, umfassend:
- Behandeln zumindest eines Teils einer Bauteiloberfläche des ermüdungsbeanspruchten Bauteils durch Aufbringen eines lumineszierenden Indikators, sodass die behandelte Bauteiloberfläche mit einer geschlossenen Indikatorschicht bedeckt ist und die Indikatorschicht fest auf dem zumindest einen Teil der Bauteiloberfläche haftet;
- zumindest abschnittsweises Erzeugen einer Abdeckschicht auf der Indikatorschicht, sodass die abgedeckte Indikatorschicht kein Lumineszenzlicht abgibt;
- Beaufschlagen des zumindest abschnittsweise mit einer abgedeckten Indikatorschicht versehenen Bauteils mit einer
Ermüdungsbeanspruchung;
- Beleuchten des zumindest einen Teils der Bauteiloberfläche mit einem Anregungslicht während der Ermüdungsbeanspruchung;
- Überwachen des zumindest einen Teils der Bauteiloberfläche während der Ermüdungsbeanspruchung mit einer Überwachungsvorrichtung und/oder durch visuelle Inspektion, um ein von der Indikatorschicht abgestrahltes Lumineszenzlicht zu detektieren, wenn ein solches die Abdeckschicht durchdringt oder wenn die Abdeckschicht die Indikatorschicht zumindest abschnittsweise freigibt.

2. Verfahren nach Anspruch 1, weiterhin umfassend:
- Aufnehmen eines Einzelbildes durch eine Bildaufnahmeeinheit und Zuordnen einer Lastwechselzahl N, wobei sich die Lastwechselzahl N aus einem Zeitpunkt des Aufnehmens des Einzelbildes oder aus einer zum Zeitpunkt des Aufnehmens akkumulierten Anzahl von Lastwechseln des Bauteils ergibt;
- Speichern des Einzelbildes mit der ihm zuordenbaren Lastwechselzahl N;
- Wiederholen der Schritte Aufnehmen, Zuordnen und Speichern.

3. Verfahren nach Anspruch 1 oder 2, weiterhin umfassend:
- Analysieren des Einzelbildes, wobei das Analysieren ein Ermitteln eines Vergleichswertes umfasst, der einen Vergleich eines Intensitätswertes mit einem vorgegebenen Intensitätsschwellwert umfasst, wobei die Wellenlänge oder der Wellenlängenbereich des Intensitätswertes und des Intensitätsschwellwertes zumindest teilweise einem Emissionsspektrum des Indikators entspricht;
- optionales Speichern des Vergleichswertes mit der dem Einzelbild zugeordneten Lastwechselzahl N;
- Ausgeben eines Signals durch die Überwachungsvorrichtung, wenn der Intensitätswert den Intensitätsschwellwert übersteigt.

4. Verfahren nach einem der Ansprüche 1 bis 3, weiterhin umfassend:
- Ausgeben eines Signals durch die Überwachungsvorrichtung, wenn die Überwachungsvorrichtung ein Indikatorsignal detektiert.

5. Verfahren nach einem der Ansprüche 1 bis 4, wobei das Bauteil einer mechanischen Ermüdungsbeanspruchung ausgesetzt ist oder einer zyklischen thermischen Belastung ausgesetzt ist, die in einer mechanischen Ermüdungsbeanspruchung resultiert.

6. Verfahren nach einem der Ansprüche 1 bis 5, wobei der zumindest eine Teil der Bauteiloberfläche ein Metall, eine metallische Legierung, ein Kohlenstoffbasiertes Verbundmaterial oder ein Polymermaterial umfasst.

7. Verfahren nach einem der Ansprüche 1 bis 6, wobei die Indikatorlösung einen in einem Indikator-Lösungsmittel gelösten, suspendierten oder dispergierten anorganischen oder organischen fluoreszierenden oder phosphoreszierenden Farbstoff umfasst.

8. Verfahren nach einem der Ansprüche 1 bis 7, wobei die Abdecklösung einen in einem Abdecker-Lösungsmittel gelösten, suspendierten oder dispergierten Abdecker umfasst.

9. Verfahren nach einem der Ansprüche 1 bis 8, wobei die Abdecklösung ein Korrosionsschutzanstrichstoff ist.

10. Verfahren nach einem der Anspruch 6 bis 9, wobei das Indikator-Lösungsmittel ein Acrylat umfasst, insbesondere ein Methylacrylat bzw. Methacrylat, ein Ethylacrylat bzw. Acrylsäureethylester oder ein Cyanacrylat, wobei das Cyanacrylat ausgewählt ist unter einem cyanacrylatbasiertem Klebstoff, umfassend: 2-Cyanacrylsäuremethylester bzw. Methyl 2-Cyanacrylat, 2-Cyanacrylsäureethylester bzw. Ethyl-2-Cyanacrylat, n-Butylcyanacrylat, Isobutylcyanacrylat, Octylcyanacrylat, oder 2-Octylcyanacrylat.

11. Vorrichtung zur Anrissdetektion an einem ermüdungsbeanspruchten Bauteil mit einem Verfahren gemäß einem der Ansprüche 1 bis 10, umfassend:
- eine Beleuchtungseinheit zur Anregung der Indikatorschicht,
- eine Bildaufnahmeeinheit,
- eine Speichereinheit,
- eine zentrale Verarbeitungseinheit CPU und
- optional eine Ausgabeeinheit.

12. Vorrichtung gemäß Anspruch 11, wobei die Beleuchtungseinheit, ausgewählt ist unter:
- einer Schwarzlichtquelle, die Licht unterhalb von 410 nm, vorzugsweise im Spektralbereich von 315 nm - 380 nm emittiert;
- einer Lampe, die Licht im Spektralbereich von 280 nm - 315 nm emittiert;
- einer Lichtquelle, die Licht im Wellenlängenbereich von 380 nm bis 780 nm emittiert.

13. Vorrichtung gemäß einem der Ansprüche 11 oder 12, wobei die Bildaufnahmeeinheit eine Detektionseinheit umfasst, die angepasst ist, ein Einzelbild des ermüdungsbeanspruchten Bauteils in einem Spektralbereich aufzunehmen, der ein Emissionsspektrum des Indikators zumindest teilweise umfasst und an eine Speichereinheit zu übergeben.

14. Vorrichtung gemäß einem der Ansprüche 11 bis 13, weiterhin umfassend einen Zähler zur Ausgabe einer Lastwechselzahl N.

15. Vorrichtung gemäß einem der Ansprüche 11 bis 14, weiterhin umfassend eine zentrale Steuereinheit bzw. CPU, die eingerichtet ist einen Datenaustausch zwischen der Einzelbildaufnahmeeinheit, dem Zähler, der Speichereinheit und optional der Einzelbildanalyseeinheit und der Detektionseinheit zu steuern, sodass ein Anriss gemäß einem der Ansprüche 1 bis 6 detektiert werden kann.

16. Verwendung einer Doppelschicht, umfassend eine erste und eine zweite Schicht, zur Detektion eines Risses in einer Bauteiloberfläche, wobei die erste Schicht ein polymerisiertes Cyanacrylat umfasst, das einen homogen verteilten Fluoreszenz- oder Lumineszenzfarbstoff aufweist und die zweite Schicht eine lichtundurchlässige, die erste Schicht einseitig bedeckende Abdeckschicht umfasst, wobei die erste Schicht stoffschlüssig mit der Bauteiloberfläche verbunden wird und die zweite Schicht bei Beleuchtung mit Schwarzlicht daraufhin inspiziert und/oder überwacht wird, ob der Fluoreszenz- oder Lumineszenzfarbstoff zumindest abschnittsweise sichtbar wird und damit das Auftreten eines Risses in der Bauteiloberfläche anzeigt.
